# EUROPÄISCHE PATENTSCHRIFT

(11) **EP 1 905 646 B1**
(45) Veröffentlichungstag und Bekanntmachung des Hinweises auf die Patenterteilung: **13.04.2011**
(21) Anmeldenummer: 07015762.3
(22) Anmeldetag: 10.08.2007
(51) Int. Cl.: B60R 5/04

(54) **Automatisch öffende Laderaumabdeckung**
Luggage compartment with automatic opening
Recouvrement de l'espace de chargement à ouverture automatique

(30) Priorität: 27.09.2006 DE 102006046069; 27.09.2006 DE 102006046065; 27.09.2006 DE 102006046064; 13.10.2006 DE 102006049065; 13.11.2006 DE 102006053680
(43) Veröffentlichungstag der Anmeldung: 02.04.2008
(73) Patentinhaber: BOS GmbH & Co. KG, 73760 Ostfildern (DE)
(72) Erfinder: Schlecht, Werner P., 71665 Vaihingen/Enz Aurich (DE)
(74) Vertreter: Rüger, Barthelt & Abel Patentanwälte

(56) Entgegenhaltungen:
- EP-A- 1 084 907
- EP-A- 1 375 791
- EP-A- 1 574 394
- JP-A- 11 286 243

## Beschreibung

Aus dem Stand der Technik ist es bekannt, zum optischen Verschließen der Ladebucht eines Kombi-Pkw Laderaumabdeckungen zu verwenden. Solche Laderaumabdeckungen sind nach Art eines Rollos ausgebildet. In einer hinter der Rücksitzlehne angeordneten länglichen Kassette, die im Fahrzeug lösbar verankert ist, ist drehbar eine Wickelwelle gelagert. Die Wickelwelle wird mit Hilfe eines Federmotors im Aufwickelsinne der Rollobahn vorgespannt, die mit einer Kante an der Wickelwelle befestigt ist.

An der anderen Kante der Rollobahn sitzt ein Konturplatte mit einem Griff. Das Konturteil kann von Hand erfasst werden und unter gleichzeitigem Ausziehen der Rollobahn in Richtung auf die Hecköffnung bewegt werden. Dort wird die Konturplatte mit seitlich vorstehenden Zapfen entsprechend eingehängt. Der Federmotor hält die Rollobahn unter Spannung.

Aus der EP 1 084 907 A2 ist eine Weiterbildung eines derartigen Rollos bekannt, das beim Öffnen der Heckklappe selbsttätig in eine teilgeöffnete Stellung übergeht. Hierdurch soll der Bedienkomfort erhöht werden. Normalerweise ist es nicht notwendig das Rollo zum Beladen oder Herausnehmen von Gegenständen aus dem Laderaum vollständig zu öffnen. Es reicht eine teilweise Öffnung, die nur so weit reicht, bis ein ungehinderter Zugang möglich ist. Bei der Anordnung nach der EP 1 084 907 A2 wird dies erreicht, indem die Konturplatte mittels Führungsschienen, die in der D-Säule eingelassen sind, in Richtung auf das Dach bewegt wird. Dazu sind in den D-Säulen Führungsachienenanordhungen vorhanden, die zwei Führungsnuten umfassen. In der einen läuft ein Zapfen des Konturteils, während in der anderen ausknicksicher ein Betätigungsglied geführt ist. Der Zapfen ist mit dem Betätigungsglied über ein Kuppelteil verbunden, das einerseits in der ersten Führungsnut und andererseits in der zweiten Führungsnut mit dem Betätigungsglied verbunden ist.

Zum Antrieb der Betätigungsglieder sind zwei Elektromotoren. Die Elektromotoren sind jedoch elektrisch miteinander bewegungssynchronisiert.

Die DE 198 25 353 A1 beschreibt eine Laderaumabdeckung, bei der die Rollobahn lediglich horizontal zu bewegen ist. Längs den Seitenkanten der Ladebucht verlaufen zwei Führungsschienen, mit denen Endstücke des Konturteils getragen und geführt werden.

In jeder der Führungsschienen sind am vorderen und am hinteren Ende Umlenkrollen in Form von Zahnriemenscheiben vorgesehen. Über jeweils die beiden Scheiben einer Führungsschiene liegt ein endloser Zahnriemen herum, dessen nach oben zeigendes Arbeitstrum ein Kupplungsteil für die seitlichen Zapfen des Konturteils trägt. Bei jeder Führungsschiene ist die zum vorderen Ende der Ladebucht hin liegende Riemenscheibe über einen eigenen Elektromotor angetrieben. Beide Motoren werden über eine aufwändige Synchronisierschaltung während ihres Laufs elektrisch synchronisiert, um einen Schräglauf des Konturteils bei der Öffnungs- oder Schließbewegung mit Sicherheit auszuschließen.

Die elektrische Synchronisierung ist technisch aufwändig und setzt Getriebemotoren voraus, die zusätzliche Signalgeber enthalten um eine elektrische Synchronisierung zu ermöglichen.

Ausgehend hiervon ist es Aufgabe der Erfindung eine Laderaumabdeckung zu schaffen, die in eine Zwischenstellung gebracht werden kann, wobei sowohl der mechanische als auch der elektrische Aufwand niedrig gehalten werden.

Diese Aufgabe wird erfindungsgemäß mit einer Laderaumabdeckung mit den Merkmalen des Anspruches 1 gelöst.

Die neue Laderaumabdeckung dient in der üblichen Weise zum Verschließen der oberen Zugangsöffnung einer Ladebucht eines Kombi-Pkw. Zu der Laderaumabdeckung gehört eine drehbar gelagerte wickelwelle, an der mit einer Kante eine Rollobahn befestigt ist. Die Rollobahn kann zwischen einer Öffnungsstellung sowie einer Schließstellung manuell hin und her bewegt werden. In der Öffnungsstellung ist die Ladebucht vollständig geöffnet, während sie in der Schließstellung, abgesehen von der Öffnung, die sonst die Heckklappe verschließt, verschlossen ist.

Zusätzlich zu diesen beiden Betriebsstellungen der Rollobahn ist eine Zwischenstellung vorgesehen, in die die Rollobahn beim Öffnen der Heckklappe automatisch gebracht wird.

An der Rollobahn ist ein Auszugsprofil, beispielsweise in Form einer Konturplatte, angebracht. Dieses Auszugsprofil wird in zwei Führungsschienenanordnungen geführt, die sich lediglich eines längs eines Weges erstrecken, dem das Auszugsprofil folgt, wenn es, ausgehend von der Schließstellung in die Zwischenstellung bewegt wird.

Zum Bewegen des Auszugsprofils, d.h. zum Überführen der Rollobahn in die Zwischenstellung bzw. aus der Zwischenstellung in die Schließstellung sind linienförmige Betätigungsglieder vorgesehen, von denen das eine in der einen Führungsschienenanordnung und das andere in der anderen Führungsschienenanordnung geführt ist.

Es sind formschlüssige Anschläge vorgesehen, um den Hub der Betätigungsglieder mittelbar oder unmittelbar zu begrenzen.

Ferner gibt es zwei Kupplungsglieder oder Kupplungsteile, über die formschlüssig das jeweilige Betätigungsglied mit einem Ende des Auszugsprofils, zumindest bezüglich einer Bewegungsrichtung, kuppelbar ist.

Zum Antrieb der Betätigungsglieder sind zwei Getriebemotoren vorgesehen, die mit derselben Nenndrehzahl arbeiten. Bei jedem Getriebemotor handelt es sich um einen permanent erregten Gleichstrommotor. Die beiden Motoren sind mechanisch und elektrisch entkoppelt und die Anordnung ist insgesamt frei von irgend welchen elektrischen oder mechanischen Einrichtungen, die während des Laufs der Motoren deren Bewegung miteinander synchronisieren.

Die beiden Getriebemotoren laufen, abgesehen von dem simultanen Einschalten, vollkommen autonom.

Der Erfinder bei der Anmelderin hat herausgefunden, dass bauartgleiche Getriebemotoren desselben Herstellers mit praktisch derselben tatsächlichen Drehzahl laufen, wenn sie für dieselbe Nenndrehzahl dimensioniert sind. Die Drehzahlabweichungen zwischen zwei Motoren sind so klein, dass während der Bewegung des Auszugsprofils zwischen der Schließstellung und der Zwischenstellung der Hubunterschied der beiden Betätigungsglieder praktisch nicht merkbar ist. Durch die formschlüssigen Anschläge wird in jedem Falle auch bei einem Abweichen der tatsächlichen Drehzahl voneinander zwangläufig dieselbe Endlage wieder hergestellt. Sobald die Motoren in der entgegengesetzten Richtung in Umdrehungen versetzt werden, starten sie wiederum an derselben Stelle zu derselben Zeit, womit selbst wenn ein Gangunterschied auftritt, der Fehler sich im Laufe der Zeit nicht akkumuliert. Es kann deswegen auf mechanische und elektrische Synchronisiereinrichtungen vollständig verzichtet werden

Der elektrische Schaltungsaufwand bleibt gering, denn elektrische Synchronisiereinrichtungen fehlen. Da auch keine mechanischen Synchronisiereinrichtungen vorhanden sind und auch jedes Betätigungsglied für sich angetrieben ist, blieben die Reibungsverluste klein, denn die Antriebsmotoren können unmittelbar neben den Führungsschienenanordnungen vorgesehen werden.

Für die Position des Auszugsprofils in der Zwischenstellung kommen grundsätzlich zwei Orte in Frage. Der eine Ort befindet sich in der Nähe der oberen Heckklappe. Dementsprechend sind die Führungsschienen auch in der D-Säule angebracht und reichen von einer Stelle, die der Schließstellung der Laderaumabdeckung entspricht bis in die Nähe der Oberkante der Hecköffnung.

Die andere Möglichkeit für die Zwischenstellung liegt auf dem Weg zwischen der Schließstellung und der vollständigen Öffnungsstellung. Hierfür verlaufen die Führungsschienenanordnungen, beginnend bei der Hecköffnung, ein Stück weit in Richtung auf die Rücksitzbank.

Eine insgesamt einfache und platzsparende Konstruktion wird erhalten, wenn die Betätigungsglieder auf der Außenseite eine Verzahnung tragen. Solche Betätigungsglieder können mit Getriebemotoren angetrieben werden, die auf ihrer Ausgangswelle ein entsprechendes Zahnrad tragen, das mit der Verzahnung formschlüssig in Eingriff steht. Irgendwelche Hubdifferenzen in Folge von Schlupf werden damit effizient ausgeschlossen.

Um bei einer Anordnung, bei der die Zwischenstellung das Auszugsprofil in der Nähe der Oberkante der Hecköffnung vorsieht, ist es von Vorteil, wenn am unteren Ende der Führungsschienenanordnung ein Einführtrichter vorgesehen ist, dessen Öffnung in Richtung auf die Rücksitzlehne zeigt.

Die Führungsschienenanordnungen setzten sich jeweils aus einer ersten Führungsnut und einer zweiten Führungsnut zusammen. In der ersten Führungsnut läuft ein Zapfen oder Fortsatz des Auszugsprofils und ein Kuppelglied hierfür. In der zweiten Führungsnut befindet sich das Betätigungsglied, das dort, je nach Ausführungsform, beispielsweise auch ausknicksicher geführt ist. Über einen Schlitz, der die beiden Führungsnuten miteinander verbindet, ist das Kuppelglied mit dem Betätigungsglied durch ein Zwischenstück verbunden.

Im Falle der Führungsschienenanordnung in der D-Säule kann die erste Führungsnut schlitzförmig sein, d.h. sie ist von zwei Flanken und einer Rückwand begrenzt.

Eine andere Möglichkeit, die sich insbesondere für die horizontal verlaufende Führungsschienenanordnung anbietet, besteht darin, die erste Führungsnut mit lediglich zwei im Winkel zueinander verlaufenden Wänden zu versehen, so dass die Führungsnut sowohl nach oben als auch in Richtung auf die gegenüberliegende Fahrzeugseite offen ist. Dadurch wird es möglich, die Rollobahn an jeder beliebigen Stelle aus dem Kupplungsglied auszuhaken und manuell in die vollständige Öffnungsstellung zu überführen. Diese Ausbildung der Führungsschienenanordnung kommt grundsätzlich auch für die Ausgestaltung mit Führungsschienenanordnungen in der D-Säule in Frage.

Das Kupplungsteil, das das Betätigungsglied mit dem Auszugsprofil verbindet, kann im einfachsten Falle eine gabelförmige Gestalt haben, die zwei Schenkel aufweist, die eine schlitzförmige Öffnung begrenzen. Je nach Lage der Führungsschienenanordnung kann diese Öffnung in Richtung parallel zur Bewegung und von der Wickelwelle weg zeigen, oder aber die Öffnung kann orthogonal zur Bewegungsrichtung ausgerichtet sein. Letzteres kommt bei der Unterbringung der Führungsschienenanordnung in der D-Säule in Frage.

Im Übrigen sind Weiterbildungen der Erfindung Gegenstand von Unteransprüchen.

Die nachfolgende Figurenbeschreibung erläutert Aspekte zum Verständnis der Erfindung. Es ist klar, dass eine Reihe von Abwandlungen möglich sind. Weitere nicht beschriebene Details kann der Fachmann in der gewohnten Weise den Zeichnungen entnehmen, die insoweit die Figurenbeschreibung ergänzen.

Die nachfolgenden Zeichnungen sind nicht unbedingt maßstäblich. Zur Veranschaulichung der wesentlichen Details kann es sein, dass bestimmte Bereiche übertrieben groß dargestellt sind. Darüber hinaus sind die Zeichnungen vereinfacht und enthalten nicht jedes bei der praktischen Ausführung gegebenenfalls vorhandene Detail.
- Fig. 1: zeigt in einer perspektivischen Ausschnittsdar- stellung den Heckbereich eines Kombi-Pkw mit ge- öffneter Heckklappe;
- Fig. 2: zeigt den unteren Endbereich der rechten Füh- rungsschienenanordnung aus dem Kraftfahrzeug nach Fig. 1, in einer vergrößerten perspektivischen Ausschnittsdarstellung;
- Fig. 3: vereinschaulicht das Antriebskonzept der Lade- raumabdeckung des Kombi-Pkw nach Fig. 1 und
- Fig. 4: zeigt eine abgewandelte Ausführungsform, bei der die Zwischenstellung der Laderaumabdeckung zwi- schen der Öffnung der Schließstellung liegt.

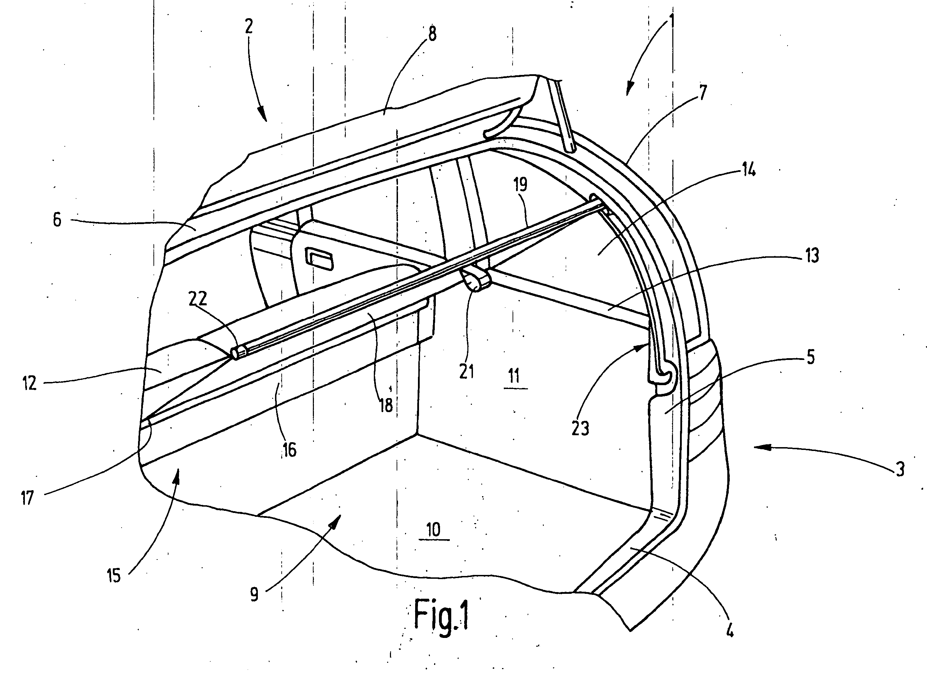

Fig. 1 zeigt einen Ausschnitt aus einer Heckpartie 1 eines Kombi-PKW 2. Zu erkennen ist dessen Hecköffnung 3, die von einer Unterkante 4, einer Seitenflanke 5, einer Oberkante 6 und einer weiteren, zu der Seitenflanke 5 spiegelbildlichen jedoch weggebrochenen Flanke begrenzt ist. Die Seitenflanke 5 wird im oberen Bereich durch eine D-Säule 7 gebildet. Im Bereich der Oberkante 6 der Hecköffnung 3 ist eine Heckklappe 8 anscharniert.

Der Kombi-PKW 2 enthält in seinem Inneren eine etwa rechteckige Ladebucht 9, die von einem Boden 10, einer rechten Seitenwand 11, der Rückseite einer Rücksitzlehne 12 sowie einer weiteren zu der Seitenwand 11 spiegelbildlichen linken Seitenwand begrenzt ist. Die beiden Seitenwände 11 enden an einer Fensterunterkante 13, oberhalb der ein hinteres Seitenfenster 14 zu erkennen ist.

Um die Ladebucht 9 nach oben optisch zu verschließen ist eine Laderaumabdeckung 15 vorgesehen, zu der eine kassettenartiges längliches Gehäuse gehört, aus der aus einem Schlitz 17 eine Rollobahn 18 ausziehbar ist. In dem kassettenartigen Gehäuse ist eine Wickelwelle drehbar gelagert, die mittels eines Federmotors im Aufwickelsinne der Rollobahn vorgespannt ist. Die Rollobahn 18 weist einen rechteckigen Zuschnitt auf, entsprechend der rechteckigen oberen Öffnung der Ladebucht 9.

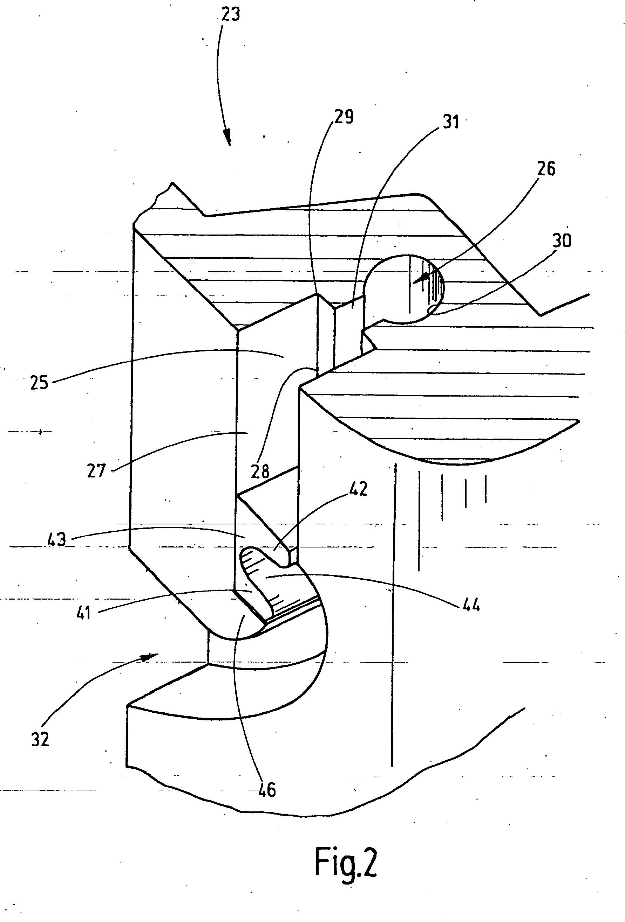

An der beweglichen Kante der Rollobahn 18 ist ein Zugstab 19 befestigt, der etwa mittig eine Griffschlaufe 21 trägt. Der Zugstab 19 weist seitliche, über die Rollobahn 18 überstehende Zapfen 22 auf, die dazu dienen, den Zugstab 19 in Führungsschienenanordnungen 23 zu führen, die zueinander parallel verlaufen und deren Aufbau sich aus der Schnittdarstellung von Fig. 2 ergibt.

Die Führungsschienenanordnung 23 ist im Bereich der D-Säule 7 enthalten und beginnt unterhalb etwa einer Höhe auf der sich die Fensterunterkante 17 befindet. Die Führungsschienenanordnung 23 folgt dem Verlauf der D-Säule 7 nach oben.

Die Führungsschienenanordnung 23 kann beispielsweise in dem Innenverkleidungsteil der D-Säule 7 integriert sein. Sie setzt sich, wie Fig. 2 erkennen lässt, aus einer ersten Führungsnut 25 sowie einer zweiten Führungsnut 26 zusammen.

Die Führungsnut 25 wird von zwei zueinander parallelen Seitenwänden 27 und 28 sowie einer Rückwand 29 begrenzt.

Die beiden Seitenwände 27 und 28 sind zueinander parallel und haben einen Abstand voneinander entsprechend etwa dem Durchmesser des Zapfens 22. Die Führungsnut 25 öffnet sich in Richtung auf die gegenüberliegende, weggebrochene Seitenflanke.

Die Führungsnut 26 setzt sich im Querschnitt aus einer Nutenkammer 30 und einem Nutenschlitz 31 zusammen. Die Nutenkammer 30 hat Kreisquerschnitt, während der Nutenschlitz 31 rechteckig ist. Er verbindet, wie die Figur erkennen lässt, die Nutenkammer 30 mit der ersten Führungsnut 25, wozu er mittig in der Rückwand 29 einmündet.

Eine entsprechende Führungsschienenanordnung 23 befindet sich spiegelbildlich in der weggebrochenen D-Säule.

Am unteren Ende bildet die Führungsnut 25 einen Einlauftrichter 32, dessen Öffnung in Richtung auf die Rücksitzlehne 12 zeigt. Ausgehend von der in Richtung auf die Rücksitzlehne 12 zeigenden Öffnung läuft der Einlauftrichter 32 mit verringerter Breite um einen Winkel von etwa 180°, um sodann am unteren Ende durch die Wand 28 in die Führungsnut 25 einzumünden.

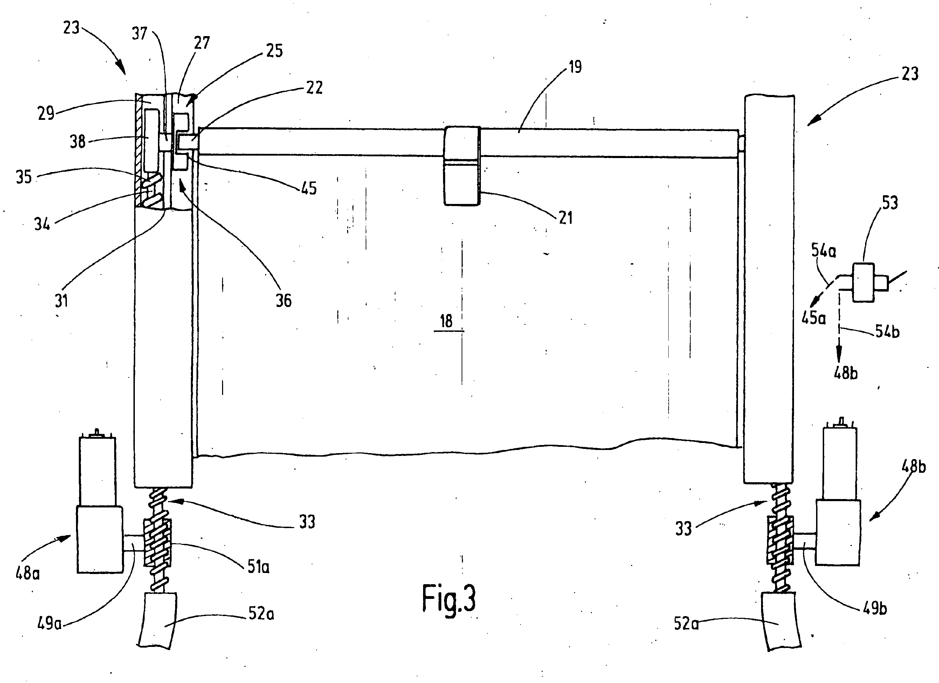

Das Antriebskonzept der Laderaumabdeckung 15 ergibt sich aus Fig. 3. Zu erkennen sind die beiden Führungsschienenanordnungen 23 rechts und links der Rollobahn 18. Die rechte Führungsschienenanordnung 23 ist geschlossen gezeigt, während die linke Führungsschienenanordnung 23 teilweise aufgebrochen ist. In dem aufgebrochenen Bereich ist die erste Führungsnut 25 mit ihrer zur Fahrzeugfront liegenden Seitenwand 27 zu erkennen, ferner eine Wand des Schlitzes 31 sowie die kreisförmige Nutenkammer 30. Die Nutenkammer 30 dient dazu ausknicksicher ein linienförmiges Betätigungselement 35 zu führen, das Druck und Zugkräfte überträgt. Das Betätigungselement 33 setzt sich aus einer biegsamen zylindrischen Seele 34 und einer darauf unbeweglich befestigten Wendel 35 zusammen. Hierdurch entsteht eine Art rundum schrägverzahnte Zahnstange, die biegsam ist. Da sie in der Kammer 39 mit geringem radialen Spiel geführt ist, kann sich auch nicht seitlich ausknicken und vermag Druckkräfte zu übertragen.

Ein entsprechendes linienförmiges Betätigungsglied 33 läuft auch in der rechten Führungsschienenanordnung 23.

Um das Betätigungsglied 33 mit dem Zugstab bzw. dessen Zapfen 22 zu kuppeln, ist ein Kupplungsglied 36 vorhanden, das über ein Halsteils 37, das durch den Schlitz 31 hindurchführt mit einem Gleitstück 38 starr verbunden ist. Das Gleitstück 38 ist ein zylindrisches Teil, das gleitend in der Kammer 29 geführt ist. Das Gleitstück 38 ist zug- und druckfest mit dem oberen Ende des linienförmigen Betätigungsgliedes 33 verbunden, so dass sich von dem Betätigungsglied 33 Zug- und Druckkräfte auf das Kupplungsteil 36 übertragen lassen.

Das Kupplungsteil 36, das in Fig. 2 perspektivisch zu erkennen ist, hat die Gestalt eines Gabelstücks mit zwei Schenkeln 41 und 42, die über ein Rückenteil 43 miteinander verbunden sind. Die beiden Schenkel 41 und 42 begrenzen ein etwa parallelflankiges Maul 44, das in Richtung auf die Wand 28, d.h. in Richtung auf die Hecköffnung 3, zeigt.

Außerdem sind die beiden Schenkel 41 und 42 durch eine Wand 45 miteinander verbunden, von der das Verbindungsstück 37 ausgeht.

In der Außengestalt ist das Kupplungsteil 36 angenähert quaderförmig. Es füllt nahezu vollständig die Führungsnut 25, wie gezeigt, aus.

Der Hub des Kupplungsteils 36 wird nach unten durch eine Anschlagfläche 46 begrenzt, die rechtwinklig aus der Wand 25 vorsteht und gleichsam Teil des Einlauftrichters 32 bildet. Eine entsprechender Anschlag ist am oberen Ende der Führungsschienenanordnung 23 gegeben, einfach in Gestalt des dort geschlossenen Endes der Führungsnut 25.

Zum Bewegen der Betätigungsglieder 33 ist am unteren Ende jeder Führungsschienenanordnung 23 jeweils ein eigener Getriebemotor 48a und 48b vorgesehen. Die beiden Getriebemotoren 48a und 48b sind baugleich und gegebenenfalls spiegelsymmetriech und weisen jeweils eine eigene Ausgangswelle 49a bzw. 49b auf. Auf der Ausgangswelle 49a sitzt ein Stirnzahnrad 51a, das so gestaltet ist, dass es formschlüssig mit dem linearen Betätigungsglied 33 in Eingriff bringbar ist. Selbstverständlich läuft das Stirnzahnrad 51a in einem Gehäuse und das Betätigungsglied 41 wird durch eine Bohrung im Gehäuse tangential an dem Stirnzahnrad 51a vorbeigeführt und mit diesem in Eingriff gehalten. Lediglich aus Darstellungsgründen wegen der Übersichtlichkeit sind diese Getriebegehäuse bei beiden Getriebemotoren 48a und 48b weggelassen.

Das überstehende Teil des Betätigungsgliedes 33 läuft als Leertrum in ein Speicherrohr 52a, das beliebig hinter der Seitenverkleidung der Seitenwand 11 verlegt werden kann.

Die für den Getriebemotor 48a und dessen Verbindung mit dem Betätigungsglied 33 erläuterten Bauteile sind auch bei dem Getriebemotor 48b anzutreffen und dort mit demselben Bezugszeichen und der Ergänzung b belegt.

Die beiden Getriebemotoren 48a und 48b sind, jeder für sich, an einen gemeinsamen schematisch angedeuteten Schalter 53 angeschlossen, mit dessen Hilfe sie mit der einen oder der anderen Polarität an das Bordnetz des Kraftfahrzeugs anschließbar sind. Die Verbindungsleitungen sind gestrichelt bei 54a und 54b angedeutet. Der Schalter 53 ist lediglich schematisch wiedergegeben und wird durch die Bewegung der Heckklappe 8 betätigt.

Selbstverständlich kann der Schalter auch durch eine Relaissteuerung ersetzt werden, deren Eingabetaster ebenfalls mit der Heckklappe 8 verbunden ist. Im Übrigen ist der Stromlaufplan nicht veranschaulicht, weil er weder Gegenstand der Erfindung noch für das Verständnis der Erfindung wesentlich ist.

Der Vollständigkeit halber sei noch erwähnt, dass innerhalb des kassettenförmigen länglichen Gehäuses 16 eine Wickelwelle drehbar gelagert ist, an der die betreffende Kante der Rollobahn 18 befestigt ist. Die Wickelwelle wird in bekannter Weise mit Hilfe eines Federmotors im Aufwickelsinne der Rollobahn 18 vorgespannt.

Sonstige Details und/oder Dimensionierungen ergeben sich implizit aus der nachfolgenden Erläuterung der Arbeits- und Funktionsweise der beschriebenen Anordnung:

In der Öffnungs- oder Offenstellung ist die Rollobahn 18 vollständig auf die Wickelwelle in dem Kassettengehäuse 16 aufgewickelt. Der Zugstab 19 liegt an dem Schlitz des Kassettengehäuses 16 an.

Zusätzlich ist durch einen in der Nähe der Heckklappenöffnung vorgesehenen Steuerschalter die Steuerung für die Laderaumabdeckung 15 auf manuellen Betrieb geschaltet was bedeutet, dass die Kupplungsteile 36 in den beiden Führungsschienenanordnungen 23 in der unteren Position gemäß Fig. 2 stehen, gleichgültig ob die Heckklappe 3 offen oder geschlossen ist. Der Benutzer kann nach Belieben die Schlaufe 21 erfassen und den Zugstab 19 auf sich zu in Richtung auf die Heckklappenöffnung 3 bewegen. Am Ende der Bewegung führt er die beiden seitlich vorstehenden Zapfen 22 über den bei jeder Führungsschienenanordnung 23 vorhandenen Einlauftrichter 32 in das Maul 44 jedes Kupplungsteils 36 einhängen. Diese Position ist die Schließstellung, in der die Ladebucht 9 von der Oberseite her gegen Sicht geschützt ist.

Nach dem Schließen der Heckklappe 8 ist die Ladebucht, soweit sie nur bis zur Fensterunterkante ausgenutzt wird, allseitig verschlossen.

Solange der nicht gezeichnete Steuerhebel auf Manuellbetrieb steht, wird nach dem Öffnen der Heckklappe 8 der Benutzer die Rollobahn 18 in der Schließstellung vorfinden, in der der Zugstab 19 in der Nähe der Hecköffnung 3 steht.

Wenn der nicht weiter gezeigte Steuerschalter auf Komfortbetrieb umgeschaltet wird, sorgt die in dem Fahrzeug vorhandenen Elektronik dafür, dass der Schalter 53 betätigt wird, in Abhängigkeit von der Position bzw. Bewegung der Heckklappe 8. Bei geschlossener Heckklappe 8 bleibt auch bei der Einstellung vom Vorbetrieb die Laderaumabdeckung in der unteren Position, in der die Rollobahn 18 im wesentlichen horizontal verläuft. Durch das Öffnen der Heckklappe 8, bei gleichzeitig eingeschaltetem Komfortbetrieb, werden über dem gesteuerten Schalter 53 gleichzeitig die beiden Getriebemotoren 48a und 48b eingeschaltet. Sie bewegen sich mit einer Drehrichtung so, dass die beiden Motoren 48a und 48b die mit Ihnen über die Zahnräder 51a und 51b gekoppelten Betätigungselemente 33 praktisch synchron von der in Fig. 2 gezeigten unteren Stellung in die in Fig. 1 veranschaulichte obere Stellung bewegen.

Da der Zugstab 19 formschlüssig mit den Kupplungsteilen 36 gekuppelt ist, wird sich die Rollobahn 18, wie in Fig. 1 gezeigt, nach oben bewegen. In der oberen Stellung steht der Zugstab 19, wie gezeigt, in der Nähe der Oberkante 6 der Hecköffnung 3, womit ein weitgehend ungehinderter Zugang zu der Ladebucht 9 möglich ist, ohne dass der Benutzer zuvor gezwungen war, manuell an der Laderaumabdeckung 15 zu manipulieren.

Wenn der Benutzer die Heckklappe 8 schließt, wird der gesteuerte Schalter 53 in die entgegengesetzte Richtung bewegt, wodurch die beiden Getriebemotoren mit entgegengesetzter Polarität mit dem Bordnetz des Kraftfahrzeugs verbunden werden. Sie drehen sich in umgekehrter Richtung und ziehen die Betätigungsglieder 33 wieder zurück in die Stellung gemäß Fig. 2. Hierbei wird die ausgezogene Rollobahn 18 nach unten geschwenkt und kommt aus der in Fig. 1 gezeigten Komfortöffnungsstellung in die Schließstellung.

Die beiden Getriebemotoren 48a und 48b laufen elektrisch und mechanisch unsynchronisiert, d.h. jeder der beiden Getriebemotoren 48a, 48b läuft mit seiner eigenen tatsächlichen Drehzahl. Diese Drehzahlen werden sehr dicht beieinander liegen, da die Motoren baugleich sind und dieselbe Nenndrehzahl haben.

Soweit tatsächlich während des Arbeitshubs aus der unteren Schließstellung in die Komfortöffnungsstellung oder zurück Gangunterschiede zwischen den beiden Betätigungsgliedern 33 auftreten, werden sie am Ende der Bewegung durch die formschlüssigen Anschläge in Gestalt der Fläche 46 oder das obere geschlossene Ende der Führungsnut 25 im Hub egalisiert. Unabhängig von der Arbeitsgeschwindigkeit wird durch die Anschläge dafür gesorgt, dass in der Blockierstellung, in der der Hub des Kupplungsteils 36 blockiert ist, und damit auch der zugehörige Getriebemotor 48 blockiert wird, die jeweils richtige Position erreicht ist.

Da es bei der vorliegenden Erfindung nicht auf die spezielle Ausgestaltung der Handsteuerelektronik ankommt braucht diese im Detail auch nicht dargestellt zu werden. Es genügt nur noch zu erwähnen, dass die Motoren auf Block laufen und der Motorstrom dann abgeschaltet wird. Dieses Abschalten kann, wie aus dem Stand der Technik bekannt, zeitgesteuert erfolgen oder stromgesteuert oder aber jeder der Motoren kann mit einem über eine Diode überbrückten Endschalter kombiniert sein.

Der Vorteil dieser Anordnung besteht darin, dass die Motoren 48 unmittelbar unterhalb des unteren Endes der Führungsschienenanordnung 23 auf jeder Kraftfahrzeugseite hinter der Seitenverkleidung untergebracht werden können. Hier existiert eine besonders gute Geräuschdämmung. Der Motorbetrieb kann keine störenden Karosserieresonanzen erzeugen. Außerdem ist die Arbeitslänge der Betätigungsglieder 33 kurz und es treten kaum Reibungsverluste auf. Das Speicherrohr für das Leertrum kann entsprechend kurz gehalten werden. Es kann aus einem flexiblen Schlauch bestehen, der weitgehend frei im Fahrzeug verlegt werden kann. Jedenfalls ist es nicht notwendig das Speicherrohr in besonderer Weise vorzuformen. Gegenüber dem bekannten Stand der Technik spart die neue Lösung aufwändige elektrische Synchronisierungen oder die mechanische Kupplung zwischen den beiden Betätigungsgliedern 33 ein, die schwer zu verlegen wäre und auch für zusätzliche Reibungsverluste sorgt.

Solange der Steuerhebel in der Position Komfort steht, wird beim Öffnen und Schließen der Heckklappe 8 die Rollobahn 18 aus der schließstellung, in der der Zugstab 19 am unteren Ende der Führungsschienenanordnung 23 steht und der Komfortstellung, in der er an dem oberen Ende steht, hin und her bewegt. Durch Umschalten der Steuerung auf Manuellbetrieb werden die beiden Motoren 48 eingeschaltet und zwar so, dass sie das Kupplungsteil 36 nach unten bewegen in die Stellung nach Fig. 2. Der Benutzer kann jetzt die Laderaumabdeckung 15 in der gewohnten Weise manuell bedienen.

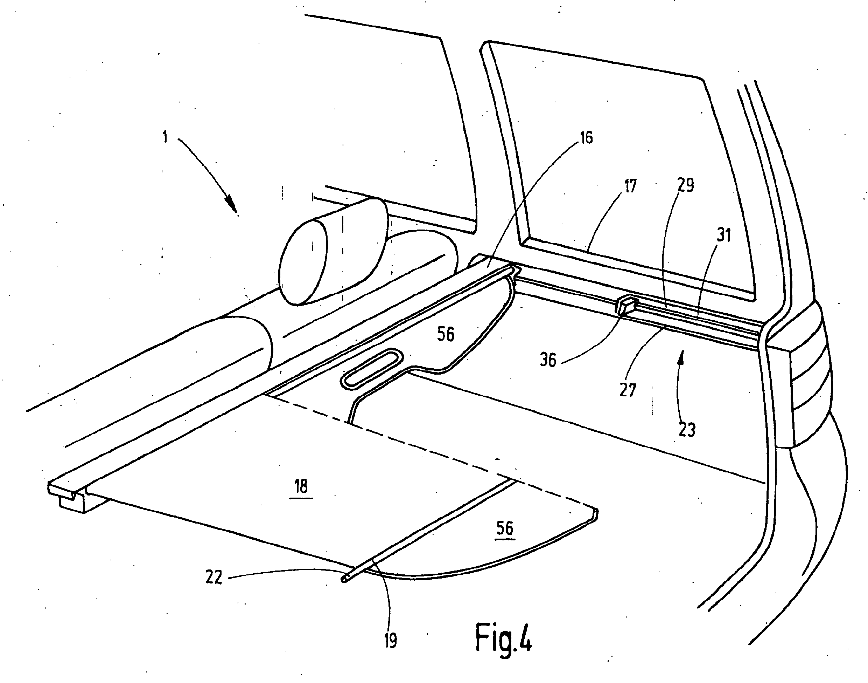

Ersichtlicherweise liegt bei dem Ausführungsbeispiel nach den Figuren 1 bis 2 die Komfortstellung außerhalb einer Ebene, in der der Zugstab 15 aus der Schließstellung in die Offenstellung bewegt wird. Fig. 4 zeigt eine alternative Ausführungsform, bei der die Komfortstellung in der Ebene liegt, die durch die Offen- und die Schließstellung definiert ist. Der wesentliche Unterschied beschränkt sich darauf, dass die Führungsschienenanordnung 23 nun nicht mehr in der D-Säule 7 untergebracht ist, sondern sie verläuft, wie Fig. 4 erkennen lässt, unterhalb der Fensterunterkante 17. Die Führungsschienenanordnung 23 hat eine Länge etwa entsprechend dem halben Hub, den der Zugstab 19, der hier mit einer Konturplatte 56 versehen ist, zurücklegt, wenn er zwischen der Offen- und der Schließstellung hin und her bewegt wird.

Die Führungsschienenanordnung 23 unterscheidet sich im Übrigen von der Ausführungsform nach Fig. 2 dadurch, dass lediglich die eine Seitenwand 27 als untere Seitenwand vorhanden ist sowie die Rückwand 29. In der Rückwand 29 ist der Schlitz 31 zu erkennen, hinter dem die zweite Führungsnut 26 verläuft. Die Wand 27 bildet gleichzeitig eine Gleit- und Auflagefläche für das Kupplungsteil 36, das in Fig. 4 in der Komfortstellung gezeigt ist.

Aus ästhetischen Gründen weist die Führungsschienenanordnung 23 eine bis zu dem Kassettengehäuse 16 reichende Verlängerung auf, in der beispielsweise auch der jeweilige Getriebemotor 48 und das Speicherrohr 52 für das Leertrum untergebracht werden kann.

Fig. 4 zeigt in der rechten oberen Hälfte die Laderaumabdeckung 15 in der Offenstellung. In dieser Position liegt, wie bereits zuvor erwähnt, der Zugstab 19 an dem Schlitz 17 des Kassettengehäuses 16 an. Die linke untere Teildarstellung veranschaulicht die Laderaumabdeckung 15 in der Schließstellung. Hier ist die Rollobahn 18 maximal ausgezogen, so dass sich der Zugstab 19 in der Nähe der Hecköffnung 3 befindet. Das Konturteil 56 verschließt den eventuell segmentförmigen Spalt zwischen der geraden Zugstange 19 und der Innenseite der Heckklappe 8.

In der Schließstellung gemäß der linken unteren Hälfte von Fig. 4 wird die Rollobahn 18 gehalten, indem das Kuppelteil 36, dessen offenes Maul 44 in Richtung auf die Heckklappe 3 zeigt, in die andere Endlage gebracht ist. In dieser Position steht das Kuppelteil 36 in der Nähe der Hecköffnung 3.

Bei der in Fig. 4 gezeigten Ausführungsform ist kein Umschalten zwischen Komfort- und Manuellbetrieb erforderlich.

Wenn der Benutzer den vollen ungehinderten Zugang zu der Ladebucht 9 haben will, bringt er die Laderaumabdeckung 15 in die Position gemäß Fig. 4, rechte obere Hälfte.

Um die Ladebucht 9 zu schließen, erfasst er die Konturplatte 56 an dem dazu vorgesehenem Griff und führt die Konturplätte bis zu den rechts und links im Fahrzeug an der gezeigten Stelle geparkten Kupplungsteilen 36. Er hängt hier die überstehenden Zapfen 22 des Zugstabs 19 ein, womit sich die Laderaumabdeckung 15 in der Itomfortzwischenstellung befindet. Mit dem Schließen der Heckklappe 7 werden, wie zuvor erläutert, die beiden Getriebemotoren 48 in Gang gesetzt, die die Betätigungsglieder 33 bewegen, die hinter der Rückwand 29 in der Führungsnut 25 geführt sind. Gegen die Wirkung des Federmotors in dem Kassettengehäuse 16 wird der Zugstab 19 und der gleichzeitigen Auszugsbewegung der Rollobahn 18 in Richtung auf die Hecköffnung 3 in die Schließstellung gemäß Fig. 4 links unten gebracht.

Am Ende des Hubs werden, wie zuvor erläutert, die Motoren 48 selbsttätig abgeschaltet.

Auch bei dem Ausführungsbeispiel nach Fig. 4 werden die Motoren auf der entsprechenden Seite nach dem Erreichen des Hubendes selbsttätig abgeschaltet, um eine thermische Überlastung zu verhindern.

Im Übrigen ist der Aufbau der Führungsschienenanordnung 23 sinngemäß der gleiche, wie dies in Verbindung mit Fig.2 bereits ausführlich erläutert ist, lediglich mit dem Unterschied, dass die Führungsschienenanordnung 23 horizontal verläuft und anstelle der schlitzförmigen Nut als Führungsnut 25 lediglich eine L-förmige Nut vorgesehen ist, die aus der unteren Wand und der Rückwand besteht. Das Kuppelteil 36 ist in derselben Weise wie bei Fig. 2 mit dem zugehörigen Betätigungsglied mechanisch verbunden.

Beim Öffnen der Heckklappe 7 werden, wie zuvor erwähnt, die Motoren wieder in umgekehrter Richtung in Gang gesetzt und bewegt den Zugstab 19 zurück in die Komfortzwischenstellung.

Wenn der Benutzer die Ladebucht 9 vollständig öffnen möchte, genügt es, wenn er die Konturplatte 56 erfasst, die Zapfen 52 durch eine kurze Bewegung in Richtung auf die Hecköffnung 3 aushängt und sodann das Rollo, wie bei einem normalen nur handbetätigten Rollo in Richtung auf das Kassettengehäuse 16 bewegt.

Die Anordnung nach Fig. 4 hat den Vorteil, dass der Benutzer die noch teilweise ausgefahrene Rollobahn 18 in der Zwischenstellung auch als Zwischenablage verwenden kann, wenn er die Ladebucht 3 ent- oder beladen möchte.

Bei einer Laderaumabdeckung sind beidseits der Rollobahn Führungsschienenanordnungen vorgesehen, um die Rollobahn, ausgehend von der Schließstellung, in eine Komfortstellung zu bringen. Zum Überführen der Rollobahn zwischen diesen beiden Stellungen sind zwei getrennte Getriebemotoren vorgesehen, die untereinander nicht synchronisiert sind. Sie laufen elektrisch und mechanisch völlig unabhängig voneinander.

## Patentansprüche

1. Laderaumabdeckung zum Verschließen der oberen Zugangsöffnung einer Ladebucht (9) eines Kombi-PKW mit Hecköffnung (3),
mit einer drehbar gelagerten Wickelwelle,
mit einer Rollobahn (18),
- die mit einer Kante an der Wickelwelle befestigt ist,
- die zwischen einer Öffnungsstellung sowie einer Schließstellung hin und her bewegbar ist, und
- die in eine Zwischenstellung bringbar ist,
- wobei in der Schließstellung die Ladebucht (9) nach oben völlig verschlossen und in der Öffnungsstellung maximal geöffnet ist, während die Ladebucht (9) in der Zwischenstellung teilweise geöffnet ist,
mit einem Auszugsprofil (19), das an einer von der Wickelwelle abliegenden Kante an der Rollobahn (18) befestigt ist,
mit zwei Führungsschienenanordnungen (23), die lediglich längs eines Wegs verlaufen, dem das Auszugsprofil (19) folgt, wenn es ausgehend von der Schließstellung in die Zwischenstellung bewegt wird,
mit zwei linienförmigen Betätigungsgliedern (33), von denen das eine in der einen Führungsschienenanordnung (23) und das andere in der anderen Führungsschienenanordnung (23) geführt ist,
mit zwei Speicherrohren (52) zur Aufnahme des jeweiligen Leertrums des Betätigungsglieds (33),
mit formschlüssigen Anschlägen (46) zum Begrenzen des Hubs der Betätigungsglieder (23),
mit zwei Kuppelgliedern (36), über die formschlüssig ein jeweiliges Betätigungsglied (23) mit einem Ende des Auszugsprofils (19) zumindest bezüglich einer Bewegungsrichtung kuppelbar ist, **dadurch gekennzeichnet, dass** die zwei Speicherrohre jeweils als flexibler Slauch ausgebildet sind, und dass die Laderaumabdeckung zwei Getriebemotoren (48) aufweist,
- die mit derselben Nenndrehzahl arbeiten,
- von den jeder einen permanent erregten Gleichstrommotor aufweist, und
wobei die beiden Getriebemotoren (48) mechanisch und elektrisch unabhängig voneinander arbeiten und die Anordnung frei von Einrichtungen ist um die Getriebemotoren (48) während ihres Laufs elektrisch miteinander zu synchronisieren.

2. Laderaumabdeckung nach Anspruch 1, **dadurch gekennzeichnet, dass** jede Führungsschienenanordnung (23) wenigstens ein Stück weit neben einer Seite (5) der Heckklappenöffnung (3) des Kombi-PKW in Richtung auf das Dach des Kombi-PKW verläuft.

3. Laderaumabdeckung nach Anspruch 1, **dadurch gekennzeichnet, dass** jede Führungsschienenanordnung (23) neben einer Seite (11) Ladebucht (9) beginnend bei der Heckklappenöffnung (3) des Kombi-PKW in Richtung auf eine Rücksitzlehne (12) des Kombi-PKW verläuft.

4. Laderaumabdeckung nach Anspruch 1, **dadurch gekennzeichnet, dass** das Betätigungsglied (33) auf seiner Außenseite eine Verzahnung (34) trägt.

5. Laderaumabdeckung nach Anspruch 4, **dadurch gekennzeichnet, dass** jeder Getriebemotor (48) ein Ausgangszahnrad (51) trägt, das mit dem jeweils zugehörigen Betätigungsglied (33) formschlüssig in Eingriff steht.

6. Laderaumabdeckung nach Anspruch 1, **dadurch gekennzeichnet, dass** die Führungsschienenanordnungen (23) in der D-Säule (7) integriert sind.

7. Laderaumabdeckung nach Anspruch 6, **dadurch gekennzeichnet, dass** die Führungsschienenanordnung (23) an ihrem unteren Ende in einem Einführtrichter (32) endet, dessen Öffnung in Richtung zu dem vorderen Ende der Ladebucht zeigt.

8. Laderaumabdeckung nach Anspruch 1, **dadurch gekennzeichnet, dass** die Führungsschienenanordnung (23) eine erste Führungsnut (25) aufweist, in der das Kupplungsglied (36) läuft.

9. Laderaumabdeckung nach Anspruch 8, **dadurch gekennzeichnet, dass** sich an die erste Nut (25) mit dem Kupplungsglied (36) eine zweite Führungsnut (26) anschließt, die sich über einen Schlitz (31) in die erste Führungsnut (25) öffnet.

10. Laderaumabdeckung nach Anspruch 9, **dadurch gekennzeichnet, dass** die zweite Führungsnut (26) eine hinterschnittene Nut ist, die sich aus im Querschnitt gesehen aus einer Nutenkammer (30) und einem Nutenschlitz (31) zusammerisetzt, wobei die Weite des Nutenschlitzes (31) kleiner ist als die in derselben Richtung gemessene Weite der Nutenkammer (29).

11. Laderaumabdeckung nach Anspruch 9, **dadurch gekennzeichnet, dass** die Nutenkammer (30) Abmessungen aufweist derart, dass das darin laufende Betätigungsglied (33) ausknicksicher geführt ist.

12. Laderaumabdeckung nach Anspruch 9, **dadurch gekennzeichnet, dass** erste Führungsnut (25) von zwei zueinander parallelen Flanken (27,28) und einer Rückwand (29) begrenzt ist und dass sich der Schlitz (31) der zweiten Führungsnut (26) in der Rückwand (29) der ersten Führungsnut (25) öffnet.

13. Laderaumabdeckung nach Anspruch 9, **dadurch gekennzeichnet, dass** die erste Führungsnut (25) lediglich von zwei im Winkel zueinander stehenden Wänden (25,29) begrenzt ist und dass sich die zweite Führungsnut (26) in die vertikal verlaufende Wand (29) einmündet.

14. Laderaumabdeckung nach Anspruch 9, **dadurch gekennzeichnet, dass** in der zweiten Führungsnut (26) ein Gleitstück (38) läuft, das mit dem Kupplungsteil (36) verbunden ist, das in der ersten Führungsnut (25) enthalten ist.

15. Laderaumabdeckung nach Anspruch 1, **dadurch gekennzeichnet, dass** das Kupplungsteil (36) gabelförmig gestaltet ist mit zwei Schenkeln (41,42), die eine schlitzförmige Öffnung (44) begrenzen.

16. Laderaumabdeckung nach Anspruch 15, **dadurch gekennzeichnet, dass** die Öffnung (44) in Richtung parallel zu der Bewegungsrichtung zeigt.

17. Laderaumabdeckung nach Anspruch 15, **dadurch gekennzeichnet, dass** die Öffnung (44) in Richtung senkrecht zu der Bewegungsrichtung zeigt.

## Claims

1. Cargo area cover for closing off the upper access opening of a loading compartment (9) of an estate vehicle with tailgate (3),
with a rotatably mounted winding shaft,
with a blind sheet (18),
• which is fastened at one edge to the winding shaft,
• which is movable back and forth between an open position and a closed position, and
• which can be brought into an intermediate position,
• wherein in the closed position the loading compartment (9) is closed off completely to the top and in the open position is opened to its maximum whereas the loading compartment (9) is partially open in the intermediate position,
with a pull-out profile (19), which is fastened to the blind sheet (18) at an edge remote from the winding shaft,
with two guide rail arrangements (23), which only run along a path that the pull-out profile (19) follows when it is moved from the closed position into the intermediate position,
with two linear operating members (33), of which one is guided in one guide rail arrangement (23) and the other is guided in the other guide rail arrangement (23), with two storage tubes (52) to receive the respective slack of the operating member (33),
with positive-locking stops (46) for restricting the stroke of the operating members (23),
with two coupling members (36), by means of which a respective operating member (23) can be positively coupled to an end of the pull-out profile (19) at least with respect to one direction of movement,
**characterised in that** the two storage tubes are respectively configured as a flexible tube, and that the cargo area cover has two geared motors (48).
• which operate at the same nominal speed,
• each of which having a permanently excited d.c. motor, and
wherein the two geared motors (48) operate mechanically and electrically independently of one another and the arrangement is free from devices to electrically synchronise the geared motors (48) to one another operation thereof.

2. Cargo area cover according to claim 1, **characterised in that** each guide rail arrangement (23) runs for at least a short distance next to a side (5) of the tailgate opening (3) of the estate vehicle towards the roof of the estate vehicle.

3. Cargo area cover according to claim 1, **characterised in that** each guide rail arrangement (23) runs next to a side (11) [of the?] loading compartment (9) beginning at the tailgate opening (3) of the estate vehicle towards a rear seat back (12) of the estate vehicle.

4. Cargo area cover according to claim 1, **characterised in that** the operating member (33) bears a tooth system (34) on its outer surface.

5. Cargo area cover according to claim 4, **characterised in that** each geared motor (48) bears an output gear wheel (51), which positively engages with the respectively associated operating member (33).

6. Cargo area cover according to claim 1, **characterised in that** the guide rail arrangements (23) are integrated into the D column (7).

7. Cargo area cover according to claim 6, **characterised in that** the guide rail arrangement (23) terminates at its lower end in a feed cone (32), the opening of which points in the direction of the front end of the loading compartment.

8. Cargo area cover according to claim 1, **characterised in that** the guide rail arrangement (23) has a first guide groove (25), in which the coupling member (36) runs.

9. Cargo area cover according to claim 8, **characterised in that** a second guide groove (26), which opens into the first guide groove (25) via a slot (31), connects to the first groove (25) with the coupling member (36).

10. Cargo area cover according to claim 9, **characterised in that** the second guide groove (26) is an undercut groove, which when viewed in cross-section is formed from a groove chamber (30) and a groove slot (31), wherein the width of the groove slot (31) is smaller than the width of the groove chamber (29) measured in the same direction.

11. Cargo area cover according to claim 9, **characterised in that** the dimensions of the groove chamber (30) are such that the operating member (33) running therein is guided so as to be secure against buckling.

12. Cargo area cover according to claim 9, **characterised in that** the first guide groove (25) is delimited by two parallel flanks (27, 28) and a rear wall (29), and that the slot (31) of the second guide groove (26) opens in the rear wall (29) of the first guide groove (25).

13. Cargo area cover according to claim 9, **characterised in that** the first guide groove (25) is only delimited by two walls (25, 29) standing at an angle to one another, and that the second guide groove (26) opens into the vertically running wall (29).

14. Cargo area cover according to claim 9, **characterised in that** a slide block (38), which is connected to the coupling part (36) and which is contained in the first guide groove (25), runs in the second guide groove (26).

15. Cargo area cover according to claim 1, **characterised in that** the coupling part (36) is configured in a fork shape with two legs (41, 42), which delimit a slot-like opening (44).

16. Cargo area cover according to claim 15, **characterised in that** the opening (44) points in a direction parallel to the direction of movement.

17. Cargo area cover according to claim 15, **characterised in that** the opening (44) points in a direction perpendicular to the direction of movement.

## Revendications

1. Dispositif de recouvrement d'espace à bagages, destiné à fermer l'ouverture d'accès supérieure d'un espace à bagages (9) d'une voiture particulière de type break, dotée d'une ouverture arrière (3),
comprenant un arbre d'enroulement monté tournant,
comprenant une bande de store (18),
- qui est fixée avec un bord à l'axe d'enroulement,
- qui peut être déplacée entre une position d'ouverture et une position de fermeture et vice versa, et
- qui peut être amenée dans une position intermédiaire,
- l'espace à bagages (9) étant complètement fermé vers le haut en position de fermeture, et étant ouvert au maximum en position d'ouverture, tandis que l'espace à bagages (9) est ouvert partiellement dans la position intermédiaire,
comprenant un profilé de traction (19) qui est fixé à un bord de la bande de store (18) éloigné de l'axe d'enroulement,
comprenant deux systèmes de rail de guidage (23) qui s'étendent seulement le long d'un chemin que suit le profilé de traction (19) lorsque, partant de la position de fermeture, il est amené dans la position intermédiaire,
comprenant deux éléments d'actionnement (33) linéaires, dont l'un est guidé dans un système de rail de guidage (23) et l'autre dans l'autre système de rail de guidage (23),
comprenant deux tubes de rangement (52) pour recevoir le tronçon non chargé respectif de l'élément d'actionnement (33),
comprenant des butées (46) à complémentarité de forme, destinées à limiter la course des éléments d'actionnement (23),
comprenant deux éléments d'accouplement (36), à l'aide desquels un élément d'actionnement (33) respectif peut être accouplé avec complémentarité de formes à une extrémité du profilé de traction (19), au moins par rapport à une direction de déplacement, **caractérisé par le fait que** les deux tubes de rangement sont réalisés chacun sous forme de tuyau souple, et **par le fait que** le dispositif de recouvrement d'espace à bagages présente deux motoréducteurs (48),
- qui fonctionnent avec la même vitesse de rotation nominale,
- qui comportent chacun un moteur à courant continu excité en permanence, et
les deux motoréducteurs (48) travaillant indépendamment l'un de l'autre sur les plans mécanique et électrique, et le dispositif est dépourvu d'installations pour synchroniser électriquement les motoréducteurs (48) pendant leur fonctionnement.

2. Dispositif de recouvrement d'espace à bagages selon la revendication 1, **caractérisé par le fait que** chaque système de rail de guidage (23) s'étend au moins sur une certaine distance en direction du toit de la voiture particulière de type break, à proximité d'un côté (5) de l'ouverture arrière (3) du break.

3. Dispositif de recouvrement d'espace à bagages selon la revendication 1, **caractérisé par le fait que** chaque système de rail de guidage (23) s'étend en direction d'un dossier de siège arrière (12) de la voiture particulière de type break, à proximité d'un côté (11) de l'espace à bagages (9), en commençant à l'ouverture arrière (3) du break.

4. Dispositif de recouvrement d'espace à bagages selon la revendication 1, **caractérisé par le fait que** l'élément d'actionnement (33) porte une denture (34) sur sa face extérieure.

5. Dispositif de recouvrement d'espace à bagages selon la revendication 4, **caractérisé par le fait que** chaque motoréducteur (48) porte une roue dentée de sortie (51) qui engrène par complémentarité de formes avec l'élément d'actionnement (33) respectif associé.

6. Dispositif de recouvrement d'espace à bagages selon la revendication 1, **caractérisé par le fait que** les systèmes de rail de guidage (23) sont intégrés dans le montant D (7).

7. Dispositif de recouvrement d'espace à bagages selon la revendication 6, **caractérisé par le fait que** le système de rail de guidage (23) se termine à son extrémité inférieure par un cône d'insertion (32) dont l'ouverture est orientée en direction de l'extrémité avant de l'espace à bagages.

8. Dispositif de recouvrement d'espace à bagages selon la revendication 1, **caractérisé par le fait que** le système de rail de guidage (23) présente une première rainure de guidage (25) dans laquelle coulisse l'élément d'accouplement (36).

9. Dispositif de recouvrement d'espace à bagages selon la revendication 8, **caractérisé par le fait qu'**il est prévu une deuxième rainure de guidage (26) qui se raccorde à la première rainure (25), contenant l'élément d'accouplement (36), et qui s'ouvre par une fente (31) dans la première rainure de guidage (25).

10. Dispositif de recouvrement d'espace à bagages selon la revendication 9, **caractérisé par le fait que** la deuxième rainure de guidage (26) est une rainure en contre-dépouille qui, vue en coupe transversale, se compose d'une cavité de rainure (30) et d'une fente de rainure (31), la largeur de la fente de rainure (31) étant inférieure à la largeur de la cavité de rainure (29), mesurée dans la même direction.

11. Dispositif de recouvrement d'espace à bagages selon la revendication 9, **caractérisé par le fait que** la cavité de rainure (30) a des dimensions telles que l'élément d'actionnement (33) qui y coulisse soit guidé en étant protégé contre le flambage.

12. Dispositif de recouvrement d'espace à bagages selon la revendication 9, **caractérisé par le fait que** la première rainure de guidage (25) est délimitée par deux flancs (27, 28) mutuellement parallèles et une paroi arrière (29), et **par le fait que** la fente (31) de la deuxième rainure de guidage (26) s'ouvre dans la paroi arrière (29) de la première rainure de guidage (25).

13. Dispositif de recouvrement d'espace à bagages selon la revendication 9, **caractérisé par le fait que** la première rainure de guidage (25) est délimitée seulement par deux parois (27, 29) formant un angle entre elles, et **par le fait que** la deuxième rainure de guidage (26) débouche dans la paroi (29) verticale.

14. Dispositif de recouvrement d'espace à bagages selon la revendication 9, **caractérisé par le fait que** dans la deuxième rainure de guidage (26), se déplace une pièce coulissante (38) qui est reliée à l'élément d'accouplement (36) logé dans la première rainure de guidage (25).

15. Dispositif de recouvrement d'espace à bagages selon la revendication 1, **caractérisé par le fait que** l'élément d'accouplement (36) est réalisé en forme de fourche, avec deux dents (41, 42) qui délimitent une ouverture (44) en forme de fente.

16. Dispositif de recouvrement d'espace à bagages selon la revendication 15, **caractérisé par le fait que** l'ouverture (44) est orientée parallèlement à la direction de déplacement.

17. Dispositif de recouvrement d'espace à bagages selon la revendication 15, **caractérisé par le fait que** l'ouverture (44) est orientée perpendiculairement à la direction de déplacement.
